# EUROPEAN PATENT APPLICATION

(11) **EP 4 601 344 A1**
(43) Date of publication of application: **13.08.2025**
(21) Application number: 22961379.9
(22) Date of filing: 04.10.2022
(51) Int. Cl.: H04W 12/06, H04W 88/04, H04W 88/06, H04W 92/18

(54) **TERMINAL, COMMUNICATION SYSTEM, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2022/037185
(87) International publication number: WO 2024/075190

(57) **Abstract**

A terminal includes: a communication unit configured to perform short range communication with a communication apparatus when a specified condition is satisfied; and a control unit configured to estimate specified information by using the short range communication. The communication unit performs wireless communication with a base station or a network based on the estimated information.

## Description

### FIELD OF THE INVENTION

The present invention relates to a terminal, a communication system and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

An NR successor system (also referred to as "6G") is expected to accommodate terminals for even more diverse use cases than those of 5G. For example, there is a possibility of implementing the diverse use cases by using short range communication to assist communications between the network (base station) and terminals.

### CITATION LIST

### Non-Patent Document

Non-Patent Document 1: 3GPP TS 38.300 V16.8.0 (2021-12)

### SUMMARY OF THE INVENTION

### TECHNICAL PROBLEM

Conventionally, there is a problem that a technique for using the short range communication in order to assist the communication between the network (base station) and terminals has not been specified in the technical specifications.

The present invention has been made in view of the above points, and it is an object of the present invention to implement the short range communications in order to assist the communication between the network (base station) and terminals.

### SOLUTION TO PROBLEM

According to the disclosed technology, a terminal is provided. The terminal includes: a communication unit configured to perform a short range communication with a communication apparatus when a specified condition is satisfied; and a control unit configured to estimate specified information by using the short range communication. The communication unit performs a wireless communication with a base station or a network based on the estimated information.

### ADVANTAGEOUS EFFECTS OF INVENTION

According to the disclosed technique, a technique is provided that enables implementation of the short range communication in order to assist the communication between the network (base station) and terminals.

### BRIEF DESCRIPTION OF THE DRAWINGS

[Fig. 1] is a drawing for describing a wireless communication system related to an embodiment of the present invention.
[Fig. 2] is a drawing for describing V2X.
[Fig. 3] is a drawing for describing an example of a transmission mode of V2X.
[Fig. 4] is a first drawing illustrating an example of a configuration of a wireless communication system related to Embodiment 1 of the present invention.
[Fig. 5] is a second drawing illustrating an example of a configuration of a wireless communication system related to Embodiment 1 of the present invention.
[Fig. 6] is a third drawing illustrating an example of a configuration of a wireless communication system related to Embodiment 1 of the present invention.
[Fig. 7] is a drawing for describing a relay communication related to Embodiment 1 of the present invention.
[Fig. 8] is a first drawing illustrating an example of a configuration of a wireless communication system related to Embodiment 2 of the present invention.
[Fig. 9] is a sequence diagram illustrating an example of a flow of communications including a short range communication related to Embodiment 2 of the present invention.
[Fig. 10] is a second drawing illustrating an example of a configuration of a wireless communication system related to Embodiment 2 of the present invention.
[Fig. 11] is a drawing illustrating an example of a functional structure of a base station related to an embodiment of the present invention.
[Fig. 12] is a drawing illustrating an example of a functional structure of a terminal related to an embodiment of the present invention.
[Fig. 13] is a drawing illustrating an example of a hardware structure of the base station or the terminal related to an embodiment of the present invention.
[Fig. 14] is a drawing illustrating an example of a structure of a vehicle related to an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

### (System configuration)

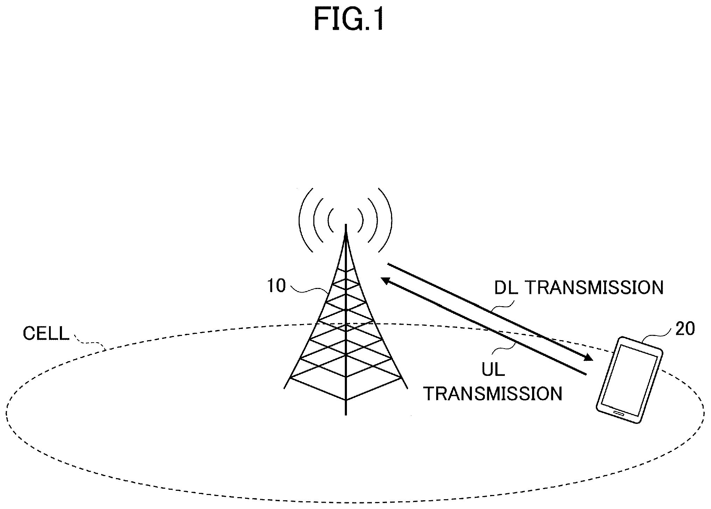

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

### (Problem of conventional technique)

An NR successor system (also referred to as "6G") is expected to accommodate terminals for even more diverse use cases than those of 5G. For example, there is a possibility of implementing the diverse use cases by using a short range communication to assist communications between the network (base station) and terminals.

For example, as an example of a use case, there is inside-body communication. There may be a case of transmitting and receiving data for medical or human-enhancement purposes by connecting a communication device inside the body to the network (base station) by using short range communication.

In addition, as an example of another use case, there is a utilization of a tag. There may be a case of transmitting and receiving data related to management of products, animals, plants, or the like, by connecting tags that are included in the products, animals, plants, or the like, to the network (base station) by using the short range communication.

For example, as an example of another use case, there is authentication, payment settlement, or the like. There may be a case of transmitting and receiving data related to execution of hands-free authentication, payment settlement, or the like, by collecting and sharing various information items by a terminal by using the short range communication.

### (Overview of embodiment)

Accordingly, in an embodiment of the present invention, an example will be described in which the short range communication is used in order to assist the communication between the network (base station) and terminals. First, the conventional V2X will be described as an example of the short range communication in an embodiment of the present invention.

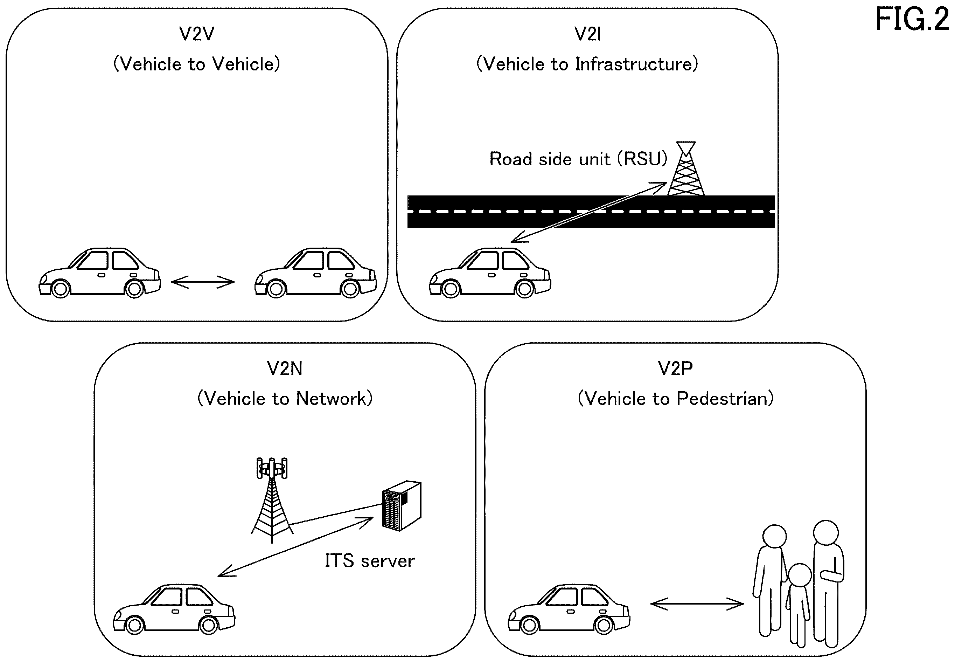

Fig. 2 is a drawing for describing V2X. In NR, by enhancing the D2D function, implementation of V2X (Vehicle to Everything) or eV2X (enhanced V2X) has been discussed and technical specifications are being developed. As illustrated in Fig. 2, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on the roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

In addition, in NR, V2X using LTE or NR cellular communications and device-to-device communications has been discussed. V2X using cellular communication may be referred to as cellular V2X. In NR V2X, there have been discussions to realize higher system capacity, reduced latency, higher reliability, and QoS (Quality of Service) control.

With respect to the LTE V2X or NR V2X, it is anticipated that discussions will go beyond the conventional technical specifications. For example, the following items are expected to be discussed: how to secure interoperability; how to reduce cost by implementing higher layers; how to use or how to switch between multiple RATs (Radio Access Technologies); how to handle regulations of each country; how to obtain and distribute data of LTE V2X or NR V2X platform; and how to manage and use databases.

In an embodiment of the present invention, the communication apparatus may be an apparatus mounted on a vehicle or a terminal carried by people, the communication apparatus may be an apparatus mounted on drones or aircraft, or the communication apparatus may be a base station, an RSU, a relay station (relay node), a terminal capable of scheduling, etc.

It should be noted that SL (Sidelink) may be distinguished from UL (Uplink) or DL (Downlink) based on any one of, or any combination of the following 1) through 4). Furthermore, SL may be referred to by a different name.
1) Resource arrangement in the time domain
2) Resource arrangement in the frequency domain
3) Synchronization signal to be referred to (including SLSS (Sidelink Synchronization Signal))
4) Reference signal that is used for path loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to a terminal 20, Mode 3 and Mode 4 are defined. In Mode 3, transmission resources are dynamically allocated using a DCI (Downlink Control Information) that is transmitted from a base station 10 to the terminal 20. In addition, SPS (Semi Persistent Scheduling) is available in Mode 3. In Mode 4, the terminal 20 autonomously selects transmission resources from a resource pool.

It should be noted that a slot in an embodiment of the present invention may be read as (replaced with) a symbol, a mini slot, a subframe, a radio frame, a TTI (Transmission Time Interval), or a time resource. Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, and may be any type of terminal that performs D2D communication. For example, the terminal 20 may be a terminal carried by a user, such as a smartphone, or an IoT (Internet of Things) device, such as a smart meter.

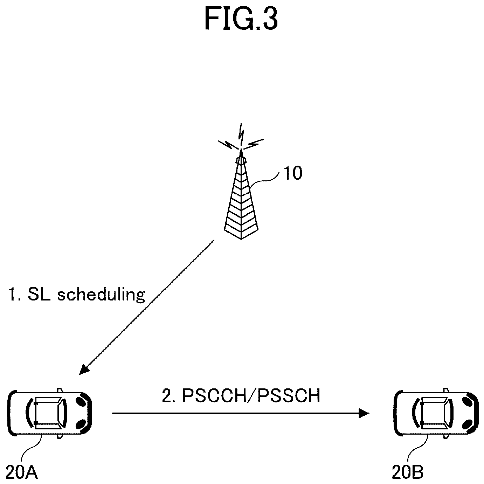

Fig. 3 is a drawing for describing an example of a transmission mode of V2X. In a transmission mode of the sidelink communication illustrated in Fig. 3, in step 1, a base station 10 transmits sidelink scheduling to a first terminal 20A. Subsequently, the first terminal 20A transmits PSCCH (Physical Sidelink Control Channel) and PSSCH (Physical Sidelink Shared Channel) to a second terminal 20B based on the received scheduling (step 2). The transmission mode of sidelink communication illustrated in Fig. 3 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment).

Next, an overview of short range communication related to an embodiment of the present invention will be described. The terminal 20 performs short range communication with a communication apparatus, and performs a predetermined operation related to the short range communication with respect to the base station 10.

Here, the predetermined operation may be transmission of a signal in each embodiment described below, or may be another operation.

The "short range communication" may mean one or more of the following communications described below.
- Communication in which a communication distance is expected to be equal to or less than a predetermined value
- Communication with a communication apparatus (relay apparatus) that has a predetermined function (for example, a function of relaying to the base station 10, a function of scheduling the terminal 20)
- Communication related to a predetermined RAT/Link (for example, sidelink)

The terminal 20 may or may not include a function of communicating with the base station 10 (network).

The short range communication may or may not be applied to one of transmission of information to the base station 10 (uplink) and reception of information from the base station 10 (downlink).

The "base station" may be replaced with a "communication apparatus".

According to the short range communication related to an embodiment of the present invention, more advanced or diverse services can be implemented by increasing devices that can be connected to the base station 10 (network).

Next, as specific examples of embodiments of the present invention, Embodiment 1 and Embodiment 2 will be described.

### (Embodiment 1)

In this embodiment, an example will be described in which the terminal communicates with the base station (network) by using the short range communication without depending on the quality of a signal from the base station and/or by using ultra-low transmission power.

According to this embodiment, for example, a use case of transmitting and receiving data for medical or human-enhancement purposes can be implemented by connecting a communication device inside the body (capsule endoscope, implantable device, or the like) to the network (base station) by using the short range communication.

In addition, according to this embodiment, for example, a use case of transmitting and receiving data related to management of products, animals, plants, or the like can be implemented by connecting tags that are included in the products, animals, plants, or the like to the network (base station) by using the short range communication.

The terminal 20 may be or may not be connected to the base station 10 (network) (for example, RRC connection).

The terminal 20 may communicate with the base station 10 (network) via a relay apparatus by using the short range communication. Here, at least a part of the relay communications described below may be applied. In addition, the communication standards for low power consumption/low transmission power/IoT terminal/passive IoT terminal (for example, sidelink for IoT) may be used.

The communication with the base station 10 (network) via a relay apparatus by using the short range communication may be applied to transmission of an uplink signal to the base station 10 (network). In this case, the terminal 20 may receive a downlink signal via direct communications with the base station 10 (network).

With respect to the terminal 20, the power may be supplied from the relay apparatus/network/base station 10/other apparatuses, or may be supplied in conjunction with the above-described short range communications.

### <Service flow example 1>

As a use case, a configuration may include registration of a device inside the body to a medical server and transmission of a control signal from the medical server or reporting of measurement results from the device inside the body. The specific configuration may be one of the following options.

### <Option 1>

The device inside the body of a patient who lives in his/her house communicates with a remote medical server apparatus.

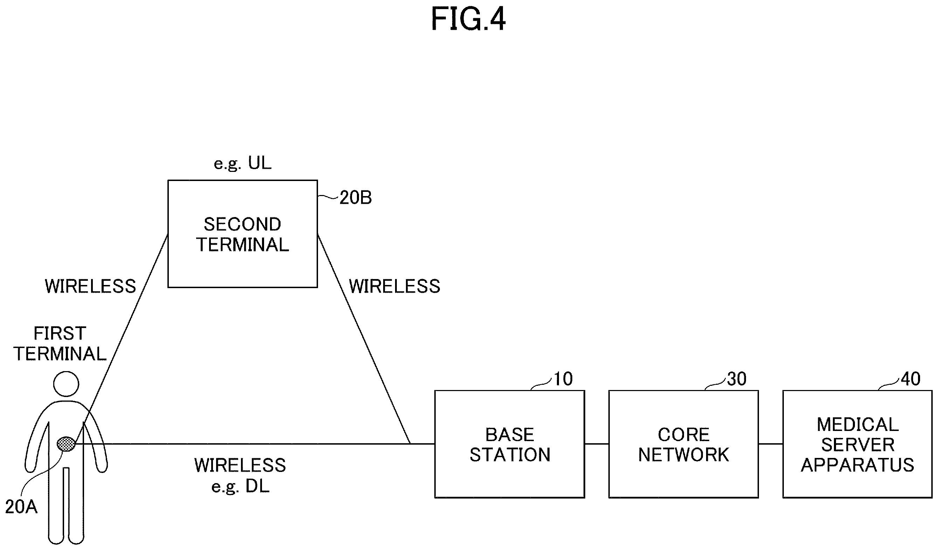

Fig. 4 is a first drawing illustrating an example of a configuration of a wireless communication system related to Embodiment 1 of the present invention. The medical server apparatus 40 is connected to and can communicate with the core network 30. The first terminal 20A that functions as a device inside the body of a patient communicates with the second terminal 20B that functions as a relay apparatus by using the short range communication, and transmits an uplink signal to the base station 10 (and the core network 30) via the second terminal 20B. In addition, the first terminal 20A may receive a downlink signal by using the direct communication with the base station 10 (network).

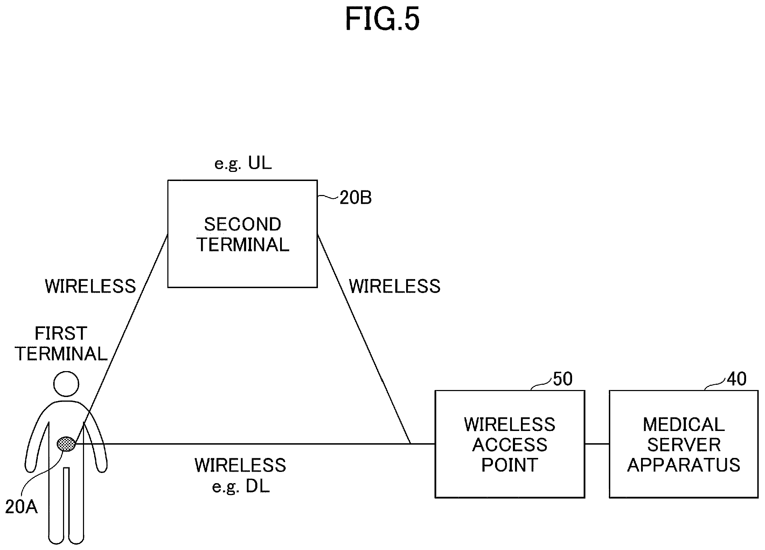

Fig. 5 is a second drawing illustrating an example of a configuration of a wireless communication system related to Embodiment 1 of the present invention. The medical server apparatus 40 is connected to and can communicate with the wireless access point 50. The first terminal 20A that functions as a device inside the body of a patient communicates with the second terminal 20B that functions as a relay apparatus by using the short range communication, and transmits an uplink signal to the wireless access point 50 via the second terminal 20B. In addition, the first terminal 20A may receive a downlink signal by using the direct communication with the wireless access point 50.

### <Option 2>

The device inside the body of a patient who is in a hospital communicates with a medical server apparatus in the hospital.

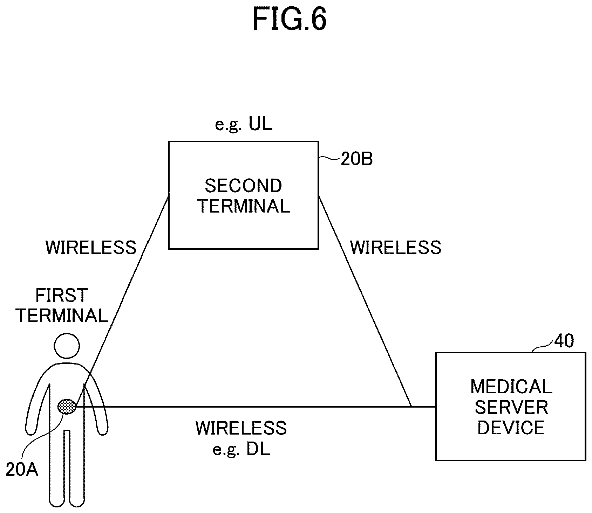

Fig. 6 is a third drawing illustrating an example of a configuration of a wireless communication system related to Embodiment 1 of the present invention. The first terminal 20A that functions as a device inside the body of a patient communicates with the second terminal 20B that functions as a relay apparatus by using the short range communication, and transmits an uplink signal to the medical server apparatus 40 via the second terminal 20B. In addition, the first terminal 20A may receive a downlink signal by using the direct communication with the medical server apparatus 40.

### <Service flow example 2a>

As a use case, a configuration may include transmission by a relay apparatus of a signal to the terminal 20 by using the short range communication in response to a request from the base station 10 (network). In addition, the terminal 20 may transmit certain data when a signal transmitted from the relay apparatus is detected, and the terminal 20 may transmit certain data according to the power supply from the relay apparatus.

### <Service flow example 2b>

The terminal 20 may periodically transmit certain data when the power supply is turned ON. The relay apparatus may transmit a signal to the base station 10 (network) in accordance with a signal transmitted from the terminal 20.

Next, a procedure of relay communications by the relay apparatus related to an embodiment of the present invention will be described.

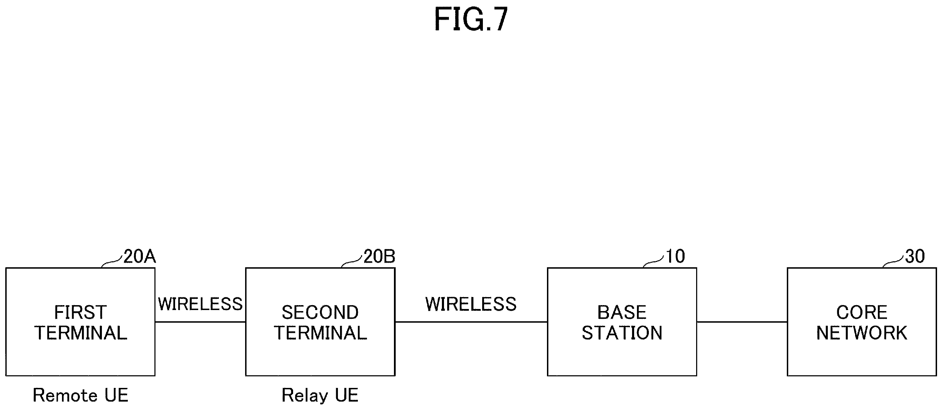

Fig. 7 is a drawing for describing the relay communications related to Embodiment 1 of the present invention. The first terminal 20A that functions as a remote terminal communicates with the base station 10 (and the core network 30) via the second terminal 20B that functions as a relay terminal. The second terminal 20B is an example of a relay apparatus.

The first processing flow is a processing flow for implementing the L3 relay. The second terminal 20B is connected to the base station 10. The second terminal 20B is registered as a relay terminal in the core network 30.

The first terminal 20A and the second terminal 20B transmit a discovery signal.

The first terminal 20A selects the second terminal 20B and establishes the PC5-RRC connection.

The second terminal 20B reports information of the terminal 20A as a remote terminal to the base station 10 (and the core network 30).

The second terminal 20B implements the data relay@L3. Accordingly, the base station 10 (or the core network 30) may pay a predetermined reward to (the subscriber of) the second terminal 20B.

The second processing flow is a processing flow for implementing the L2 relay.

The second terminal 20B is connected to the base station 10. The second terminal 20B is registered as a relay terminal in the core network 30.

The first terminal 20A and the second terminal 20B transmit a discovery signal.

The first terminal 20A selects the second terminal 20B and establishes the PC5-RRC connection. The first terminal 20A and the base station 10 transmit and receive information related to the RRC connection establishment such as RRCSetupRequest via the second terminal 20B.

The second terminal 20B implements the data relay@L2. Accordingly, the base station 10 (or the core network 30) may pay a predetermined reward to (the subscriber of) the second terminal 20B.

The third processing flow is a processing flow for implementing the L1 relay.

The second terminal 20B is connected to the base station 10. The second terminal 20B is registered as a relay terminal in the core network 30.

The second terminal 20B performs a relay transmission of a signal transmitted from the base station 10 (RF repeater) and/or a relay transmission of a signal transmitted from the terminal 20.

In other words, the second terminal 20B implements the data relay@L1. Accordingly, the base station 10 (or the core network 30) may pay a predetermined reward to (the subscriber of) the second terminal 20B.

According to an embodiment of the present invention, services related to a terminal that has a difficulty of directly connecting to the base station 10 (network) or the like can be implemented.

### (Embodiment 2)

In this embodiment, an example will be described in which the terminal performs the short range communication in a case where a specified condition is satisfied and performs communications with the network or base station based on the information that is obtained by using the short range communication.

According to this embodiment, for example, a use case of transmitting and receiving data related to execution of hands-free authentication, payment settlement, or the like, can be implemented by collecting and sharing various information items by a terminal by using the short range communication.

The specified condition may be one of the following.
- A condition that the communication with a specified communication apparatus can be performed
- A condition that the power received from a specified communication apparatus exceeds a predetermined value
- A condition that the distance from a specified communication apparatus is equal to or less than a predetermined value

The specified communication apparatus may be a vending machine, a ticket gate, or the like. The terminal may be, for example, a smartphone, a wearable terminal, a card, or the like, for authentication or payment settlement.

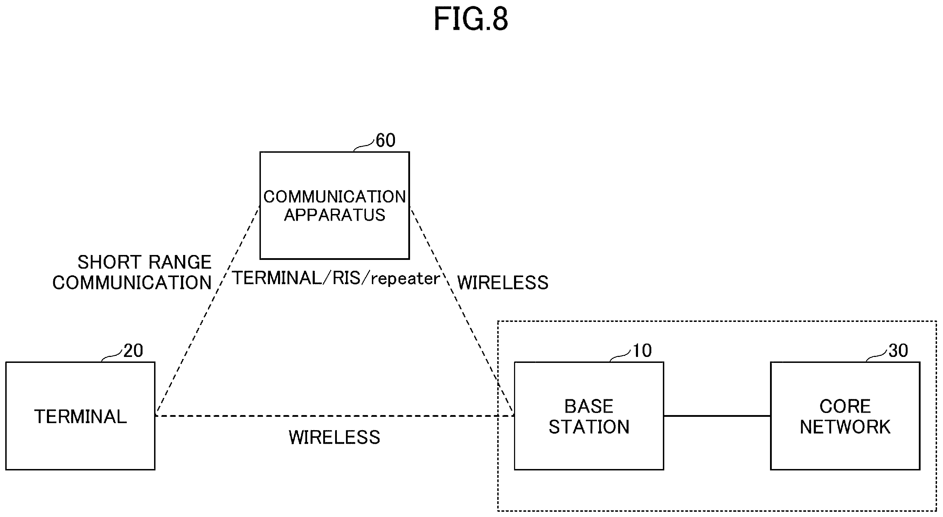

Fig. 8 is a first drawing illustrating an example of a configuration of a wireless communication system related to Embodiment 2 of the present invention. The terminal 20 may estimate the position or direction of the terminal 20, an intention of a user who operates the terminal 20, or the like, by using the short range communication with the communication apparatus 60. For example, the estimated information may include information indicating that the terminal 20 has moved, information indicating whether or not the terminal 20 has entered the target area, information indicating whether or not a user who operates the terminal 20 has a purchasing intention, or the like.

The terminal 20 may perform the above-described estimation by performing the communication between the terminal 20 and/or the communication apparatus 60 and the base station 10.

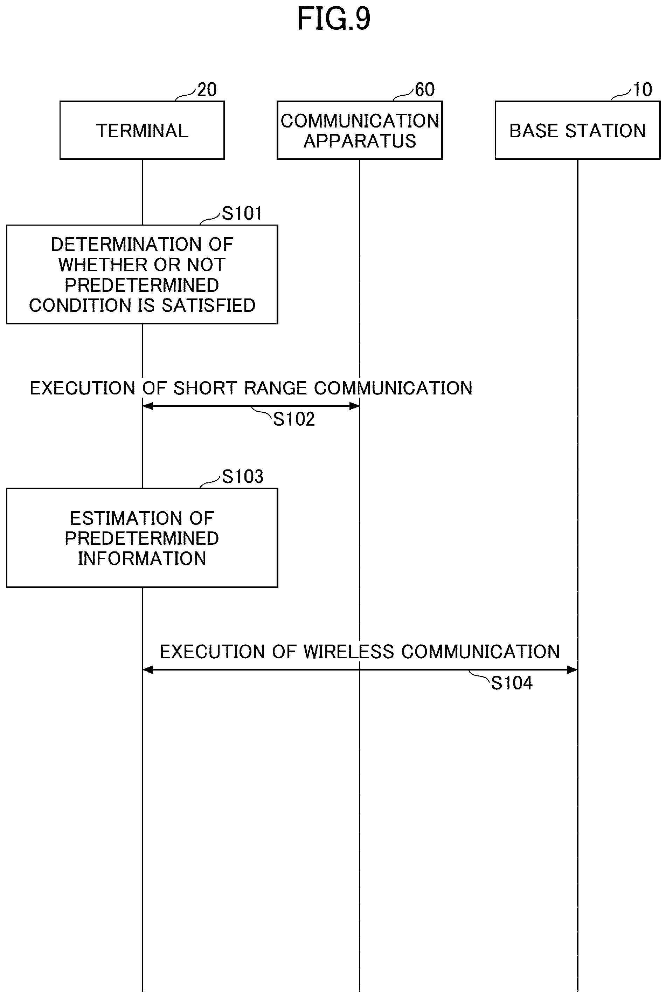

Fig. 9 is a sequence diagram illustrating an example of a flow of communications including a short range communication related to Embodiment 2 of the present invention. The terminal 20 determines whether the specified condition is satisfied (step S101). Subsequently, the terminal 20 performs the short range communication with the communication apparatus 60 (step S102). According to the above-described operation, the terminal 20 estimates the specified information (step S103). Subsequently, the terminal 20 performs wireless communications with the base station 10 based on the estimated information (step S104).

In addition, the terminal 20 may directly transmit the estimated information to the base station 10, or may transmit the estimated information to the base station 10 via the communication apparatus 60, another apparatus, a relay apparatus, or the like.

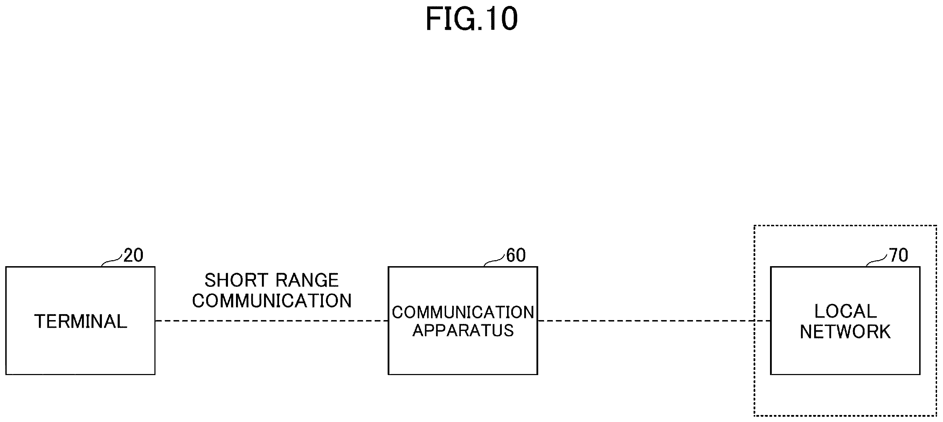

Fig. 10 is a second drawing illustrating an example of a configuration of a wireless communication system related to Embodiment 2 of the present invention. The terminal 20 may perform wireless communications with the local area network 70 via the communication apparatus 60 based on the estimated information. In this case, the terminal 20 may directly transmit the estimated information to the local area network 70, or may transmit the estimated information to the local area network 70 via the communication apparatus 60, another apparatus, a relay apparatus, or the like.

### <Service flow example>

After the above-described processing flow is performed, the communication apparatus 60 or the base station 10 transmits an inquiry for information indicating the result of authentication or payment settlement to the local area network 70 or the core network 30, and completes the authentication or payment settlement in accordance with the response from the local area network 70 or the core network 30.

According to this embodiment, services that have conventionally required an operation of a user can now be provided without an operation of a user.

### (Device configuration)

Next, a functional configuration example of the base station 10 and the terminal 20 for performing the processes and operations described above will be described.

### <Base station 10>

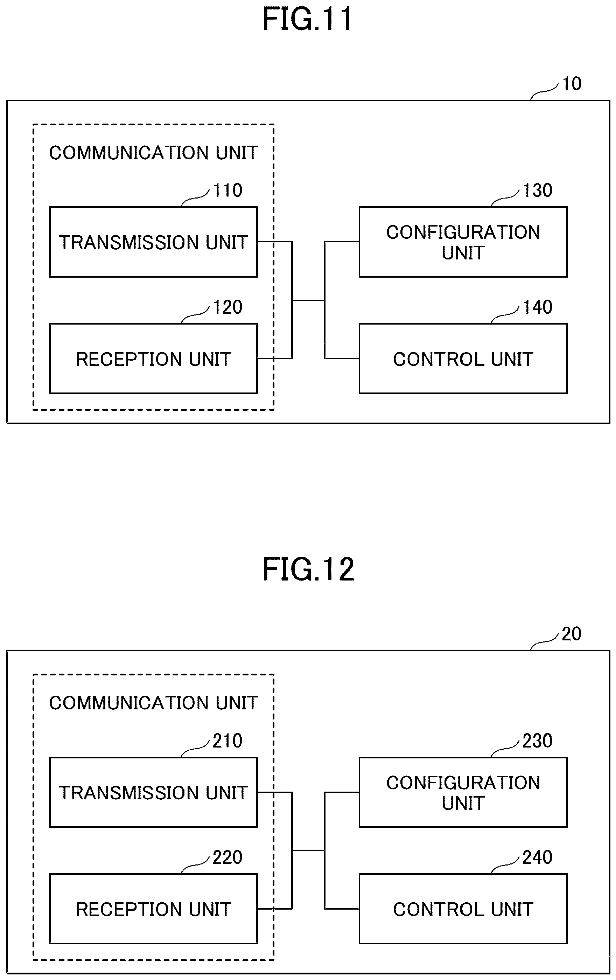

Fig. 11 is a diagram illustrating an example of a functional configuration of the base station 10. As shown in Fig. 11, the base station 10 includes a transmission unit 110, a reception unit 120, a configuration unit 130, and a control unit 140. The functional configuration illustrated in Fig. 11 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the setting unit 130 and reads the preset configuration information from the storage apparatus if necessary.

The control unit 140 performs scheduling of the terminal 20 for DL reception or UL transmission, via the transmission unit 110. In addition, the control unit 140 includes a function of performing LBT. The functional units related to signal transmission in the control unit 140 may be included in the transmission unit 110, and the functional units related to signal reception in the control unit 140 may be included in the reception unit 120. Further, the transmission unit 110 may be referred to as a transmitter, and the reception unit 120 may be referred to as a receiver.

### <Terminal 20>

Fig. 12 is a diagram illustrating an example of a functional configuration of the terminal 20. As shown in Fig. 12, the terminal 20 includes a transmission unit 210, a reception unit 220, a configuration unit 230, and a control unit 240. The functional configuration illustrated in Fig. 12 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores pre-configured configuration information. The control unit 240 controls the terminal 20. In addition, the control unit 240 includes a function of performing LBT.

The terminal or the communication system in an embodiment of the present invention may be configured to be a terminal or a communication system as described in each of the items below. In addition, a communication method below may be performed.

### <Configuration related to an embodiment of the present invention>

### (First item)

A terminal including:
a communication unit configured to perform short range communication with a communication apparatus when a specified condition is satisfied; and
a control unit configured to estimate specified information by using the short range communication, wherein
the communication unit performs wireless communication with a base station or a network based on the estimated information.

### (Second item)

The terminal as described in the first item, wherein
the terminal further comprises a transmission unit configured to transmit the estimated information to the base station or the network, directly or via another device.

### (Third item)

The terminal as described in the first item, wherein
the specified condition is one of: a condition that communication with the communication apparatus is available; a condition that power received from the communication device exceeds a specified value; or a condition that a distance from the communication apparatus is equal to or less than a specified value.

### (Fourth item)

The terminal as described in the first item, wherein
the specified information is a position of the terminal, a direction of the terminal, or an intention of a user operating the terminal.

### (Fifth item)

A communication system comprising: a terminal; a communication apparatus; and a base station, wherein
the terminal includes:
a communication unit configured to perform short range communication with the communication apparatus when a specified condition is satisfied; and
a control unit configured to estimate specified information by using the short range communication, wherein
the communication unit performs wireless communication with the base station based on the estimated information.

### (Sixth item)

A communication method performed by a terminal, the communication method including:
performing short range communication with a communication apparatus when a specified condition is satisfied;
estimating specified information by using the short range communication; and
performing wireless communication with a base station or a network based on the estimated information.

According to any one of the above-described configurations, a technique is provided that enables to implement the short range communication in order to assist the communication between the network (base station) and terminals. According to the first item, the specified information can be estimated by using the short range communication, and the wireless communication with the base station or network can be perform based on the estimated information. According to the second item, the estimated information can be transmitted to the base station or the network directly or via another apparatus. According to the third item, the specified information can be estimated by having one of the conditions satisfied, the conditions being a condition that the power received from the communication apparatus exceeds a specified value, or a condition that the distance from the communication apparatus is equal to or less than a specified value. According to the fourth item, the position or direction of the terminal or an intention of a user who operates the terminal can be estimated.

### (Hardware structure)

The block diagrams that have been used to describe the above embodiments (Fig. 11 and Fig. 12) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional blocks (components) to implement a function of transmission may be referred to as a "transmitting section (transmitting unit)," a "transmitter," and the like. The method for implementing each component is not particularly limited as described above.

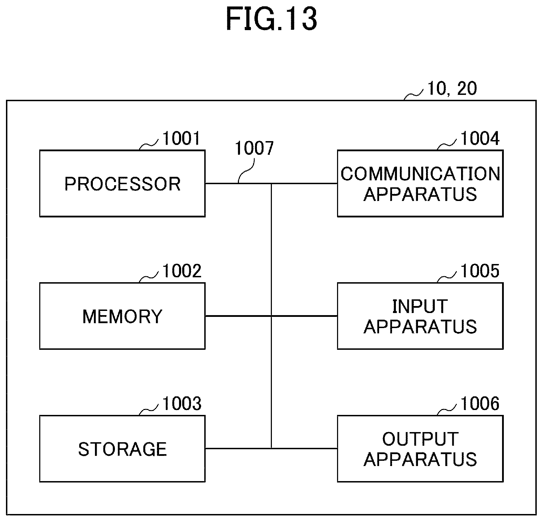

For example, the base station 10, the terminal 20, etc., according to an embodiment of the present disclosure may function as a computer for processing the radio communication method of the present disclosure. Fig. 13 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 11 may be implemented by control programs that are stored in the memory 1002 and that operate on the processor 1001. In addition, for example, the control unit 240 of the terminal 20 illustrated in Fig. 12 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

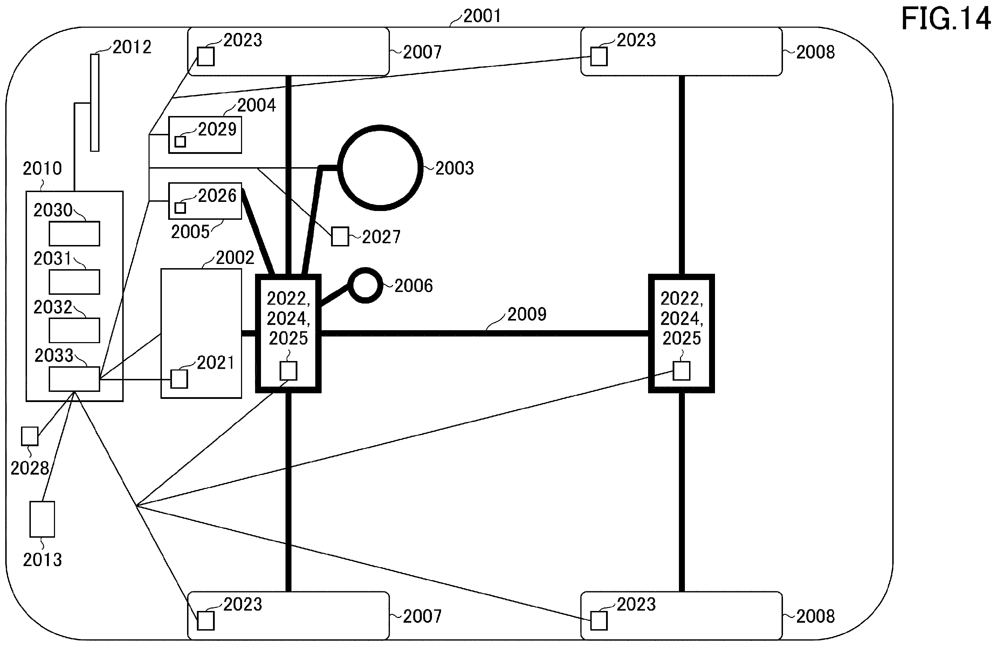

Fig. 14 shows an example of a configuration of a vehicle 2001. As shown in Fig. 14, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2029 described above input to the electronic control unit 2010 , information obtained based on the signals, and information based on an input from the outside (a user) obtained via the information service unit 2012, to the external apparatus via radio communication. The electronic control unit 2010, the various sensors 2021 to 2029, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
40 Medical server apparatus
50 Wireless access point
60 Communication apparatus
70 Local area network
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a communication unit configured to perform short range communication with a communication apparatus when a specified condition is satisfied; and
a control unit configured to estimate specified information by using the short range communication, wherein
the communication unit performs wireless communication with a base station or a network based on the estimated information.

2. The terminal as claimed in claim 1, wherein
the terminal further comprises a transmission unit configured to transmit the estimated information to the base station or the network, directly or via another device.

3. The terminal as claimed in claim 1, wherein
the specified condition is one of: a condition that communication with the communication apparatus is available; a condition that power received from the communication device exceeds a specified value; or a condition that a distance from the communication apparatus is equal to or less than a specified value.

4. The terminal as claimed in claim 1, wherein
the specified information is a position of the terminal, a direction of the terminal, or an intention of a user operating the terminal.

5. A communication system comprising: a terminal; a communication apparatus; and a base station, wherein
the terminal includes:
a communication unit configured to perform short range communication with the communication apparatus when a specified condition is satisfied; and
a control unit configured to estimate specified information by using the short range communication, wherein
the communication unit performs wireless communication with the base station based on the estimated information.

6. A communication method performed by a terminal, the communication method comprising:
performing short range communication with a communication apparatus when a specified condition is satisfied;
estimating specified information by using the short range communication; and
performing wireless communication with a base station or a network based on the estimated information.
